# EUROPEAN PATENT APPLICATION

(11) **EP 4 803 967 A1**
(43) Date of publication of application: **09.09.2026**
(21) Application number: 23957578.0
(22) Date of filing: 30.10.2023
(51) Int. Cl.: G05B 19/418

(54) **MANAGEMENT DEVICE, MANAGEMENT METHOD, AND PROGRAM**

(71) Applicant: Kobayashi Manufacture Co., Ltd., Hakusan-shi, Ishikawa 924-0855 (JP)
(72) Inventor: KOBAYASHI, Yasunori, Hakusan-shi, Ishikawa 924-0855 (JP)
(74) Representative: Bandpay & Greuter
(86) International application number: PCT/JP2023/039149
(87) International publication number: WO 2025/094249

(57) **Abstract**

A management device includes: receiving means for receiving input of a delivery date of a product ordered by a customer for each of a plurality of products manufactured through a plurality of processes including a blanking process of blanking one or a plurality of components from a sheet material; acquisition means for acquiring man-hours required for each of the plurality of processes; selection means for selecting at least some components from among a plurality of components constituting one or a plurality of products for which the blanking process has not been completed among ordered products, based on the man-hours and the delivery date; instruction means for instructing allocation of the selected components to allocation means that allocates instructed components to the sheet material for the blanking process; transport assignment means for assigning each of the selected components obtained from the blanking process on the sheet material to which the selected components have been allocated by the allocation means, to a transport means, among a plurality of transport means, that transports the component to a workplace of a post-process subsequent to the blanking process; and output means for outputting a result of the assignment.

## Description

### [Technical Field]

The present invention relates to technology for a management device, a management method, and a program.

### [Related Art]

Techniques for managing schedules for processes in a factory that manufactures products are known. For example, Patent Document 1 discloses a management device that provides ease of viewing of a work schedule for manufacturing products, even when the number of products to be manufactured is large.

Patent Document 2 discloses a sheet metal process work support system that includes a display device for displaying in a database during a process of cutting component sheet materials from a raw sheet material and performing cutout processing, information on the component sheet materials cut out from the raw sheet material along with images such as nesting layout diagrams.

Patent Document 3 discloses an arrangement data creation device that creates arrangement data for executing nesting to arrange respective components to be produced on a usable material based on component data of multiple components, including length, as information regarding each component, in order to improve a yield rate representing a ratio of remaining material to a base material during a component cutout process.

### [Prior Art Documents]

### [Patent Documents]

Patent Document 1: Japanese Patent No. 7061402
Patent Document 2: Japanese Patent No. 5879725
Patent Document 3: Japanese Patent No. 6572356

### [Summary]

### [Problem to be Solved]

Patent Document 1 is limited to presenting to a user a schedule of an entire manufacturing process in a viewer-friendly manner. Further, although the invention of Patent Document 2 displays to a worker additional information, including nesting layout diagrams, and the like for components in a sheet material for a cutout process of component sheet materials, the advantage of the invention is limited to increased convenience for the worker, and does not extend to schedule management for a manufacturing process. Further, although the invention of Patent Document 3 enables selection of components and creation of a layout diagram with minimal waste by taking into account physical requirements (length, shape, material type, etc.) of each component when nesting components on a base material, the invention is limited to solving a general problem of improving yield efficiency by reducing a ratio of remaining material.

In view of the above background, the present invention provides technology for determining a nesting arrangement in consideration of a process schedule and improving workability and convenience of a manufacturing process.

### [Solution]

One aspect of the present disclosure provides a management device having: receiving means for receiving input of a delivery date of a product ordered by a customer for each of a plurality of products manufactured through a plurality of processes including a blanking process of blanking one or a plurality of components from a sheet material; acquisition means for acquiring man-hours required for each of the plurality of processes; selection means for selecting at least some components from among a plurality of components constituting one or a plurality of products for which the blanking process has not been completed among ordered products, based on the man-hours and the delivery date; instruction means for instructing allocation of the selected components to allocation means that allocates instructed components to the sheet material for the blanking process; transport assignment means for assigning each of the selected components obtained from the blanking process on the sheet material to which the selected components have been allocated by the allocation means, to one of a plurality of transport means, that transports the component to a workplace of a post-process subsequent to the blanking process; and output means for outputting a result of the assignment.

The management device may have calculation means for calculating a latest start date of the blanking process of the component for each of the one or plurality of components constituting each of the plurality of products using the man-hours and the delivery date, wherein the selection means selects the at least some components based on the latest start date.

The management device may have determination means for determining necessity of correction of the allocation, wherein when it is determined by the determination means that the correction is necessary, the instruction means instructs the allocation means to correct the allocation.

The acquisition means may acquire the man-hours required for the process for each of the plurality of processes from a database in which man-hours defined for each process are recorded.

The management device may have grouping means for dividing the at least some components into a plurality of groups; and worker assignment means for assigning a plurality of workers to the plurality of groups in a specific process among the plurality of processes, wherein man-hours are recorded for each process and for each worker in the database, and the acquisition means acquires man-hours required for the assigned worker to carry out the specific process from the database.

The plurality of transport means may include a plurality of transport means having different shapes or types, and the transport assignment means may select one transport means from among the plurality of transport means according to transport conditions of each of the some components, and assign the component to the selected transport means.

The transport conditions may include a condition regarding at least one of a shape, a size, a weight, and presence or absence of handling precautions for the component.

The transport conditions may include a condition regarding a post-process subsequent to the blanking process for the component and a worker of the post-process.

The plurality of transport means may include at least one type among a trolley, a pallet, and an automated guided vehicle.

The management device may have access means for accessing a database in which current positions of the plurality of transport means are recorded, wherein the transport assignment means assigns the component to a transport means located at a specific position among the plurality of transport means.

Another aspect of the present disclosure provides a management method in which a computer executes: receiving input of a delivery date of a product ordered by a customer for each of a plurality of products manufactured through a plurality of processes including a blanking process of blanking one or a plurality of components from a sheet material; acquiring man-hours required for each of the plurality of processes; selecting at least some components from among a plurality of components constituting one or a plurality of products for which the blanking process has not been completed among ordered products, based on the man-hours and the delivery date; instructing allocation of the selected components to allocation means that allocates instructed components to the sheet material for the blanking process; assigning each of the selected components obtained from the blanking process on the sheet material to which the selected components have been allocated by the allocation means, to a transport means, among a plurality of transport means, that transports the component to a workplace of a post-process subsequent to the blanking process; and outputting a result of the assignment.

Another aspect of the present disclosure provides a program for causing a computer to execute: receiving input of a delivery date of a product ordered by a customer for each of a plurality of products manufactured through a plurality of processes including a blanking process of blanking one or a plurality of components from a sheet material; acquiring man-hours required for each of the plurality of processes; selecting at least some components from among a plurality of components constituting one or a plurality of products for which the blanking process has not been completed among ordered products, based on the man-hours and the delivery date; instructing allocation of the selected components to allocation means that allocates instructed components to the sheet material for the blanking process; assigning each of the selected components obtained from the blanking process on the sheet material to which the selected components have been allocated by the allocation means, to a transport means, among a plurality of transport means, that transports the component to a workplace of a post-process subsequent to the blanking process; and outputting a result of the assignment.

### [Technical Effects]

According to the present invention, a nesting arrangement can be determined in consideration of a process schedule, and workability and convenience of a manufacturing process can be improved.

### [Brief Description of Drawings]

[FIG. 1] A diagram illustrating an overview of processing of a management system according to related art.
[FIG. 2] A diagram illustrating a system configuration of a management system 1.
[FIG. 3] A diagram illustrating a functional configuration of the management system 1.
[FIG. 4] A diagram illustrating a hardware configuration of a management device 10.
[FIG. 5] A diagram illustrating a hardware configuration of a user terminal 20.
[FIG. 6] A flowchart illustrating an operation overview in the management system 1.
[FIG. 7] A sequence chart illustrating a nesting allocation method in the management system 1.
[FIG. 8] A diagram illustrating a product management database.
[FIG. 9] A diagram illustrating welding work efficiency.
[FIG. 10] A diagram illustrating welding work/welding schedule.
[FIG. 11] A diagram illustrating an all-process schedule.
[FIG. 12] A diagram illustrating a nesting arrangement.
[FIG. 13] A flowchart illustrating a re-nesting method in the management system 1.
[FIG. 14] A sequence chart illustrating a method of acquiring position information of transport means in the management system 1.
[FIG. 15] A diagram illustrating transport means and transport conditions.
[FIG. 16] A sequence chart illustrating an assignment method of transport means in the management system 1.
[FIG. 17] A diagram illustrating an assignment result of transport means.
[FIG. 18] A diagram illustrating a label.
[FIG. 19] A diagram illustrating inter-process movement of transport means.

### [Detailed Description]

### 1. Overview

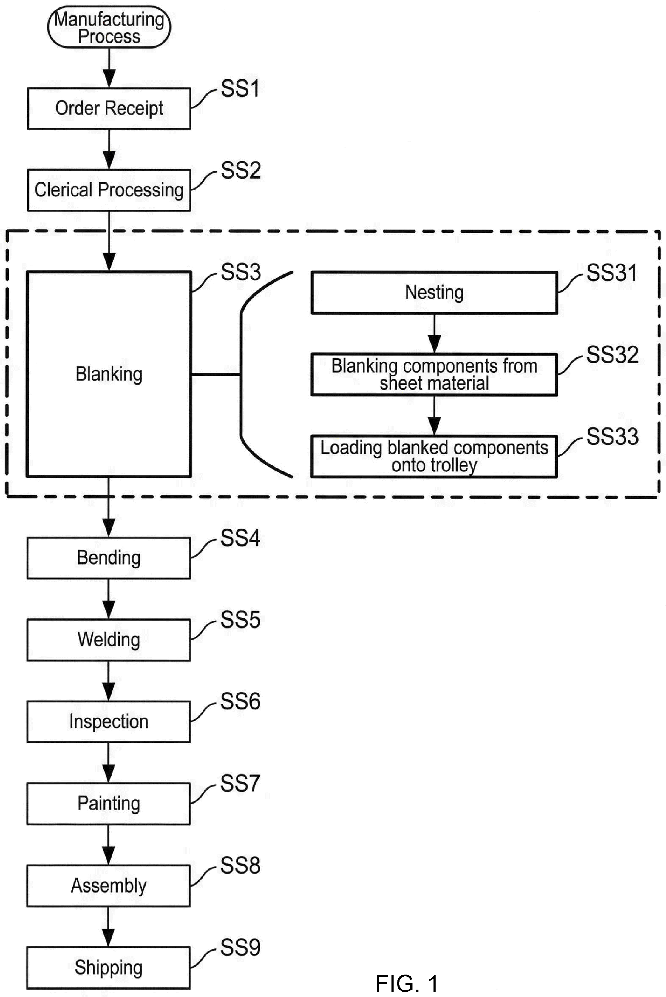

FIG. 1 shows an overview of processing of a management system according to related art. In this example, the management system refers to a system for managing each process for a product manufactured through a plurality of processes (manufacturing processes or manufacturing procedures). In this example, a product refers to an article manufactured in a factory or the like in response to an order from a customer. In this example, a product is composed of one or a plurality of components. Here, for convenience of explanation, a manufactured item related to a customer order and final delivery is called a product, and an item in a state before completion is called a component. In this example, the management system has the following manufacturing processes.

In step SS1, the management system receives an order for a product from a customer. In this example, upon receiving the order, the management system acquires information regarding the customer and the product, for example, order information such as the name/title and address of the customer, the quantity of products, a delivery date, a specification document, an instruction sheet representing work instruction details of the manufacturing process, and the number/types of components. In this example, the delivery date includes a due date by which the product as a finished good must be delivered to the customer. In step SS2, the management system performs clerical processing based on the order information. Thereafter, the process proceeds to manufacturing processing at a factory site (an example of a workplace) or the like.

In step SS3, the management system manages a blanking process. In this example, the blanking process is a process of blanking one or a plurality of components from a processing target material such as sheet metal (or simply sheet material), that is, cutting (severing) the sheet material into various shapes. In this example, the blanking process is performed using a press machine, a laser machine, or the like. Here, more specifically, the blanking process is subdivided into the following three processes.

In step SS31, the management system manages nesting. In this example, nesting refers to, for example, selecting one or a plurality of components for one sheet material and determining the arrangement of each component. In this example, the selection of components is performed based on, for example, the acquired order information. Further, the determination of the arrangement of the components on the sheet material is performed by a server (or system) dedicated to nesting. In this example, nesting is customarily performed so that the so-called "yield," such as the ratio of remaining material to the sheet material or time-versus-outcome (effect), is optimized. Note that the arrangement determined here is also referred to as nesting allocation.

In step SS32, the management system manages a process of blanking components from the sheet material in accordance with the nesting allocation. This corresponds to the so-called blanking process described above. In this example, in the blanking process, firstly, a press machine, a laser machine, or the like cuts the sheet material into the shape of each component in accordance with the nesting allocation described above. Secondly, a worker engaged in the factory or the like extracts each cut component from the sheet material. Thereby, the management system can manufacture/process the foundational components.

The components subjected to blanking processing in step SS33 are loaded onto a transport means such as a trolley via a worker or the like. In this example, the transport means refers to a physical method for transporting/conveying components to a place where a process subsequent to the blanking process (post-process) is performed. In this example, the blanked components are assigned to the transport means in advance and conveyed to the next process. Subsequently, processes subsequent to the blanking process will be described.

In step SS4, the management system manages a bending process. In this example, the bending process is a process of processing the component blanked by the blanking process into a three-dimensional (planar) shape using a press machine or the like. In this example, management of each process is performed by input of progress by a worker (via keyboard or barcode) or by automatic judgment by a camera installed at the site. Further, at least a part of the process is performed by a worker. In step SS5, the management system manages a welding process. In this example, the welding process is a process of manufacturing/processing a new part (an example of a component) by joining components manufactured in the preceding process using a welding machine or the like. In step SS6, the management system manages an inspection process. In this example, the inspection process is a process of confirming conformity of quality (state), quantity, operation, standards, etc., of the components manufactured in the preceding process. In step SS7, the management system manages a painting process. In this example, the painting process is a process of applying paint or the like to the exterior of each component. In step SS8, the management system manages an assembly process. In this example, the assembly process is a process of combining manufactured components according to an assembly drawing to provide a finished product. The above constitutes a general manufacturing process.

Finally, in step SS9, the management system can deliver the product to the customer through a shipping process of shipping the product (finished good) to a destination based on the order information. Note that, in this example, the operation shown in FIG. 1 is merely an example, and generally, processes can be freely changed (added/deleted/swapped) according to product specifications or factory manufacturing equipment. Further, for any process including the above, a process performed chronologically before it is defined as a pre-process, and a process performed after it is defined as a post-process.

Here, functions required for a management system managing the entire manufacturing process include schedule management of all processes (delivery dates), each process, and workers for a plurality of products handled in the factory, and improvement of workability/convenience in each process and between processes. More specifically, for example, in step SS31, simply performing nesting allocation processing that optimizes the yield rate cannot be said to be a necessary and sufficient function. In addition to delivery dates of a plurality of products (components), it is required to simulate in advance man-hours of post-processes such as a bending process and/or a welding process related to each component, and schedules, work efficiency, and man-hours of workers involved in the post-processes, and then perform nesting. In this example, man-hours represent, for example, work time defined for each process indicating how much time it takes to process one component. From the above, an object of the present invention is, in particular, to perform nesting based on man-hours of post-processes and delivery dates of respective components.

Further, if nesting allocation is performed considering only optimization of yield in step SS32 and components are blanked from a sheet material, there is a risk that cut components may accumulate at the exit of the blanking process depending on the facility status of transport means or the processing status of post-processes. In order to avoid such a situation, optimal assignment needs to be performed in advance according to the facility status of transport means and the like. More specifically, assignment corresponding to types of trolleys/types of components, assignment with good workability considering types of post-processes/locations of sites, and loading order, etc., is required. Furthermore, highly convenient operation is required in which product information and schedule (process) information are clearly associated with each extracted component and a worker is made familiar with them. This is another one of the objects of the present invention. From the above, the present invention mainly has features for achieving such objects. Subsequently, more specific configurations and operations in the present invention will be described in Chapter 2 and Chapter 3, respectively.

### 2. Configuration

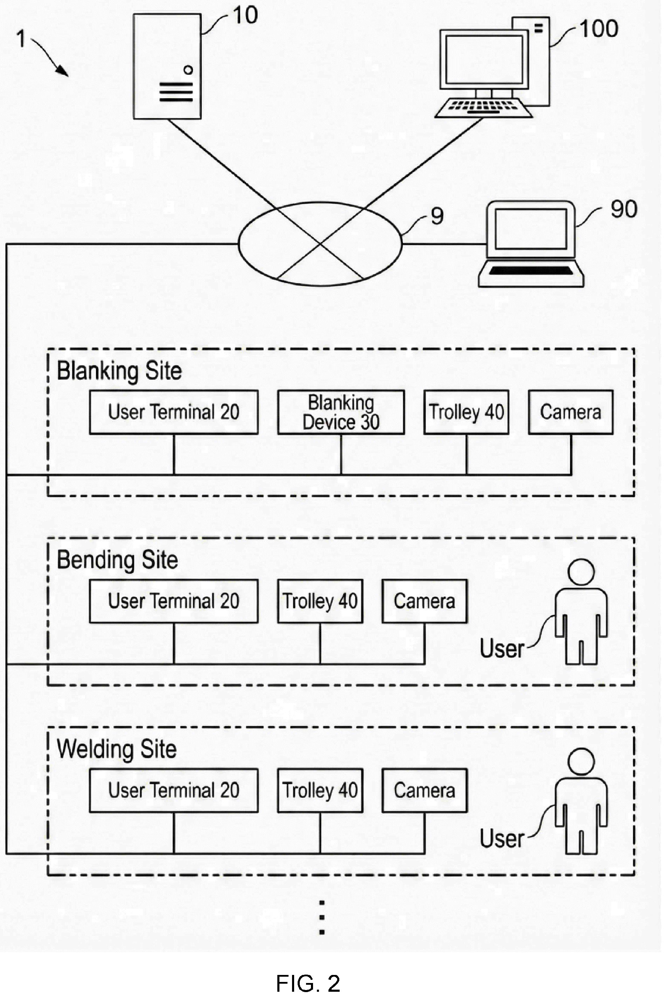

FIG. 2 shows a system configuration of a management system 1. In this example, the management system 1 includes a management device 10, a server device 100, a user terminal 20, a blanking device 30, a trolley 40, a camera, and a user terminal 90. In this example, respective components of the system are connected in a complex manner via a network 9 as shown in FIG. 2. In this example, the network 9 is a computer network such as the Internet.

In this example, the management device 10 is an information processing device/server device in the management system 1. In this example, the management device 10 receives an order for a product from the user terminal 90, which is a customer's terminal, and at that time, receives a delivery date of the product. In this example, the management device 10 manages all processes and each process of a factory for manufacturing the ordered product. In this example, when managing a blanking process of blanking components from a sheet material, the management device 10 selects components based on man-hours and delivery dates. Further, the management device 10 instructs allocation to the server device 100 (an example of allocation means), which is a dedicated server for allocating the selected components to the sheet material for the blanking process.

Further, in this example, the management device 10 assigns each of the components obtained from the blanking process to a trolley 40, which is an example of a transport means that transports the component to a workplace of a post-process subsequent to the blanking process. Furthermore, the management device 10 clearly associates product information, component information, and process information regarding identification of each of the components or the post-process, and presents information including a movement instruction for the trolley 40 assigned to the component to a worker at the site (or simply referred to as a user).

In this example, the server device 100 is a dedicated server that performs nesting allocation in the management system 1. The server device 100 is managed and operated by, for example, a manufacturer or a sales company of the blanking device 30. That is, in this example, the server device 100 is managed and operated by a business operator different from that of the management device 10. The server device 100 receives an instruction for allocation from the management device 10. The server device 100 allocates the instructed components to a sheet material for the blanking process; that is, performs nesting. The server device 100 outputs data representing the generated nesting allocation to the management device 10.

Here, the user terminal 20, the blanking device 30, the trolley 40, and the camera include devices or equipment installed at a site for each process in a factory or the like, which is a manufacturing site. In this example, the site for each process represents a site where sites are divided for each process, such as a blanking site, a bending site, or a welding site.

In this example, the user terminal 20 represents a terminal operated by a user at the site. In this example, the user refers to a member who works at/manages the site of each process, and is basically present at all process sites (partially omitted in the figure). In this example, for example, a user at the blanking site blanks components from a sheet material using a press machine/laser machine or the like. Further, the user sorts the blanked components, loads them onto the trolley 40, and moves them to a site of a post-process subsequent to the blanking process. In this example, the user terminal 20 presents various kinds of information of each of the components acquired from the management device 10, for example, information including a correspondence relationship of the trolley 40 assigned to the component and a movement instruction for the trolley 40, to the user at the site. Note that the user terminal 20 has a printing device for printing a label that presents various kinds of information to the user at the site for each component. In this example, by attaching the label to the component blanked in the blanking process, various kinds of information can be presented to the user.

In this example, the blanking device 30 includes a press machine/laser machine or the like for blanking components from a sheet material in the blanking process. The blanking device 30 cuts out components from the sheet material based on a nesting layout diagram or the like directly acquired from the management device 10 or the server device 100.

In this example, the trolley 40 (an example of transport means) includes moving means/moving equipment for transporting/conveying components between sites for each process. The trolley 40 includes a pallet and an automated guided vehicle (AGV) in addition to a general-purpose trolley. The trolley 40 can transmit its own position to the management device 10 via the network 9 and have it recorded in a database.

In this example, the camera includes imaging means for monitoring/recording the site for each process. In this example, the camera is used when monitoring whether there is any abnormality in the manufacturing process or identifying the whereabouts of the trolley 40.

In this example, the user terminal 90 represents a terminal used by a customer. In this example, the user terminal 90 transmits order information such as an order received from the customer and a delivery date of a product to the management device 10.

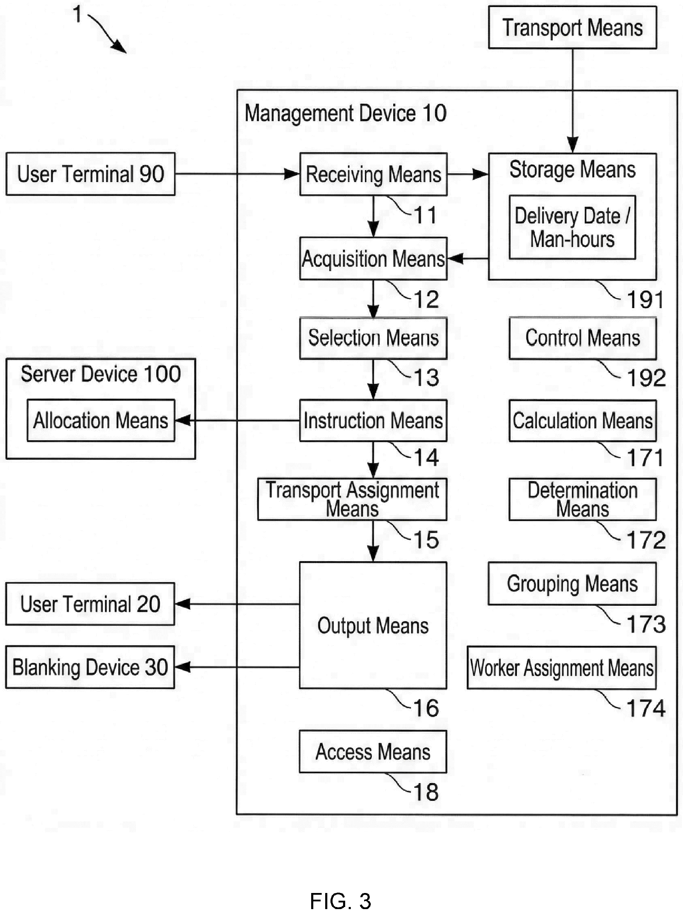

FIG. 3 shows a functional configuration of the management system 1. In this embodiment, the management device 10 has receiving means 11, acquisition means 12, selection means 13, instruction means 14, transport assignment means 15, output means 16, calculation means 171, determination means 172, grouping means 173, worker assignment means 174, access means 18, storage means 191, and control means 192. In this example, the storage means 191 stores various kinds of data including, for example, a database. In this example, the control means 192 performs various controls.

In this example, the receiving means 11 receives, via the user terminal 90, input of a delivery date of a product ordered by a customer for each of a plurality of products manufactured through a plurality of processes including a blanking process of blanking one or a plurality of components from a sheet material. The receiving means 11 records the received delivery date in a database.

In this example, the acquisition means 12 acquires man-hours required for each of the plurality of processes. In this example, the acquisition means 12 acquires man-hours required for each of the plurality of processes from a database in which man-hours defined for each process are recorded.

In this example, the selection means 13 selects at least some components from among a plurality of components constituting one or a plurality of products for which the blanking process has not been completed among ordered products, based on man-hours and delivery dates.

In this example, the instruction means 14 instructs allocation (nesting allocation) of the selected components to allocation means (for example, the server device 100) that allocates the instructed components to the sheet material for the blanking process. In this example, the instruction is an instruction including the components selected by the management device 10. Further, the instruction means 14 can output various kinds of information such as the size, quantity, and material of each component to the server device 100 together with the instruction described above. Based on these instructions, the server device 100 performs nesting allocation.

In this example, the transport assignment means 15 assigns each of the selected components obtained from the blanking process on the sheet material to which the components selected by the allocation means have been allocated, to a transport means, among a plurality of transport means, that transports the component to a workplace of a post-process subsequent to the blanking process. In this example, the plurality of transport means include a plurality of transport means having different shapes or types. In this example, the transport assignment means 15 selects one transport means from among the plurality of transport means according to transport conditions of each of some components, and assigns a component to the selected transport means. In this example, the transport conditions include a condition regarding at least one of a shape, a size, a weight, and presence or absence of handling precautions for the component. Further, the transport conditions include a condition regarding a post-process subsequent to the blanking process for the component and a worker of the post-process. In this example, the plurality of transport means include at least one type among a trolley, a pallet, and an automated guided vehicle.

In this example, the output means 16 outputs a result of the assignment to the user terminal 20. In this example, the output means 16 can output various kinds of data including a nesting layout diagram and the like to the user terminal 20 and the blanking device 30.

In this example, the calculation means 171 calculates a latest start date of the blanking process of the component for each of one or a plurality of components constituting each of the plurality of products using the man-hours and the delivery date. In this example, the latest start date includes a deadline date and a time by which the blanking process of the component needs to be started at the latest (at this time) in order to meet the delivery date of the product. In this example, the selection means 13 selects at least some components based on the latest start date.

In this example, the determination means 172 determines necessity of correction of the allocation. In this example, when it is determined by the determination means 172 that correction is necessary, the instruction means 14 instructs the allocation means to correct the allocation.

In this example, the grouping means 173 divides at least some components into a plurality of groups. In this example, the groups include a group according to products, a group according to components, a group according to workers, and a group according to delivery dates or latest start dates.

In this example, the worker assignment means 174 assigns a plurality of workers to the plurality of groups in a specific process among the plurality of processes. Here, in the database, man-hours are recorded for each process and for each worker. In this example, the acquisition means 12 acquires man-hours required for the assigned worker to perform work of the specific process from the database.

In this example, the access means 18 accesses a database in which current positions of the plurality of transport means are recorded. In this example, the transport assignment means 15 assigns the component to a transport means located at a specific position among the plurality of transport means.

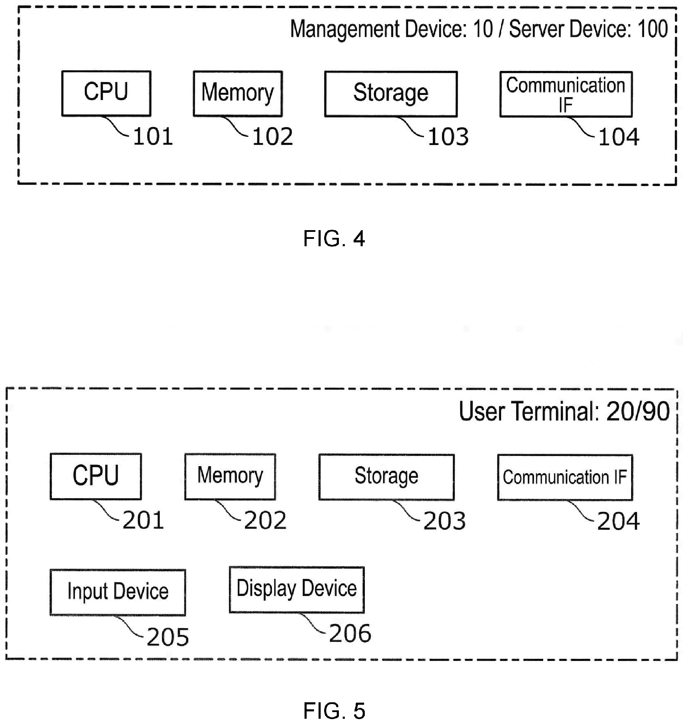

FIG. 4 shows a hardware configuration of the management device 10. In this example, the management device 10 is a computer or a general-purpose server having a CPU (Central Processing Unit) 101, a memory 102, a storage 103, and a communication IF 104. The CPU 101 is a processor that performs various calculations according to a program. The memory 102 is a main storage device that functions as a work area when the CPU 101 executes a program, and includes, for example, a RAM (Random Access Memory). The storage 103 is an auxiliary storage device that stores various kinds of data and programs, and includes, for example, an SSD (Solid State Drive) or an HDD (Hard Disc Drive). The communication IF 104 is a device that communicates with other devices according to a predetermined communication standard, and includes, for example, a NIC (Network Interface Card).

In this example, the programs stored in the storage 103 include a program for causing a computer to function as a server in the management system 1 (hereinafter referred to as "server program"). In a state where the CPU 101 is executing the server program, the CPU 101, the memory 102, the storage 103, and the communication IF 104 are examples of functions for operating the management device 10. The CPU 101 is an example of the acquisition means 12, the selection means 13, the transport assignment means 15, the calculation means 171, the determination means 172, the grouping means 173, the worker assignment means 174, the access means 18, and the control means 192. At least one of the memory 102 and the storage 103 is an example of the storage means 191. The communication IF 104 is an example of the receiving means 11, the instruction means 14, and the output means 16. Note that the server device 100 is a computer or a general-purpose server having a hardware configuration similar to that of the management device 10 described above (not shown).

FIG. 5 shows a hardware configuration of the user terminal 20. In this example, the user terminal 20 is a computer having a CPU 201, a memory 202, a storage 203, a communication IF 204, an input device 205, and a display device 206, and includes, for example, a smartphone, a tablet, or a personal computer. The CPU 201 is a processor that performs various calculations according to a program. The memory 202 is a main storage device that functions as a work area when the CPU 201 executes a program, and includes, for example, a RAM. The storage 203 is an auxiliary storage device that stores various kinds of data and programs, and includes, for example, an SSD or an HDD. The communication IF 204 is a device that communicates with other devices according to a predetermined communication standard, and includes, for example, a wireless chip when communicating wirelessly. The input device 205 is a device for inputting information to the user terminal 20, and includes, for example, a touch screen, a keyboard, a mouse, or a pointing device. The display device 206 is a device that displays information, and includes, for example, an organic EL display or a liquid crystal display.

In this example, the programs stored in the storage 203 include a program for causing a computer to function as a client in the management system 1 (hereinafter referred to as "client program"). In a state where the CPU 201 is executing the client program, the CPU 201, the memory 202, the storage 203, the communication IF 204, the input device 205, and the display device 206 are examples of functions for operating the user terminal 20.

The user terminal 90 is a computer having a hardware configuration similar to that of the user terminal 20 described above, and includes, for example, a smartphone, a tablet, or a personal computer (not shown). In this example, the user terminal 90 has a client program similar to that of the user terminal 20 described above. The configuration of the management system 1 has been described up to this point. Next, the operation of the management system 1 will be described.

### 3. Operation

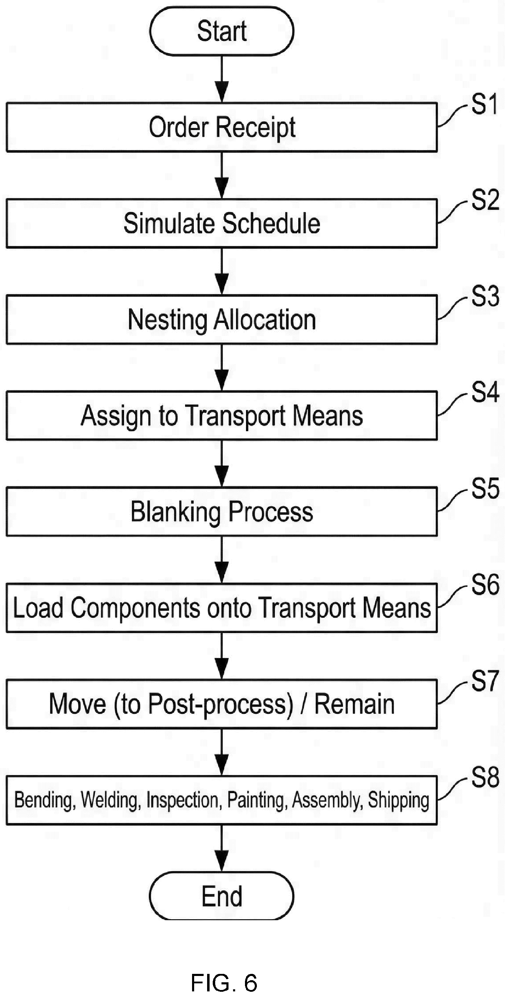

FIG. 6 is a flowchart illustrating an operation overview of the management system 1. In this example, the management system 1 proceeds with processing according to the following control (flow) as a whole. In step S1, the management system 1 receives an order for a product from a customer. In this example, the management system 1 acquires the order information and the like described above and records them in the database.

In step S2, the management system 1 simulates manufacturing process schedules of a plurality of products based on the order information. In this example, simulation refers to determining a process for each component on a schedule with respect to a delivery date of a product. In this example, the management system 1 performs simulation based on man-hours of each component and the delivery date of the product.

In step S3, the management system 1 performs nesting allocation. In this example, the management device 10 selects components to be allocated to a sheet material based on the schedule determined by the simulation. The management device 10 instructs allocation to the server device 100. The server device 100 receives the instruction for allocation from the management device 10. The server device 100 performs nesting for allocating the selected components to the sheet material.

In step S4, the management system 1 assigns a transport means to each nested component. In this example, the management system 1 determines in advance which component is to be loaded onto which transport means based on, for example, transport conditions and/or the position of the trolley 40.

In step S5, the management system 1 manages the blanking process. In this example, for example, the blanking device 30 installed at the site cuts each component from the sheet material based on the determined nesting allocation.

In step S6, the management system 1 loads the extracted components onto the transport means. This processing may be performed by manual assistance by a user who is a worker, or by loading onto the transport means using a robotic hand or a belt conveyor or the like. At this time, each component is loaded (or placed) on the corresponding transport means based on information determined in advance regarding which transport means each extracted component is to be loaded onto (or whether it is placed at a predetermined place without being loaded).

In step S7, the management system 1 moves the transport means to the post-process site. Alternatively, the transport means is left at the blanking site. As for the movement of the transport means, an example in which a worker carries it manually or a transport robot or a belt conveyor carries it automatically can be considered.

In step S8, the management system 1 performs bending, welding, inspection, painting, and/or assembly, etc., at the post-process site to which the components have been moved, and finally ships the product toward the customer's destination. Bending, welding, inspection, painting, and/or assembly may be performed manually by a worker for at least a part of the process.

The operation overview of the management system 1 has been described above. Note that FIG. 6 is merely an overview of an operation example, and details of more specific operations (sequences) are performed by apparatuses, terminals, devices, equipment, etc. in the management system 1. Further, the operations described above do not technically contradict the overview of the related art described in FIG. 1. Next, detailed operations will be described below.

### 3-1. Nesting Allocation Method

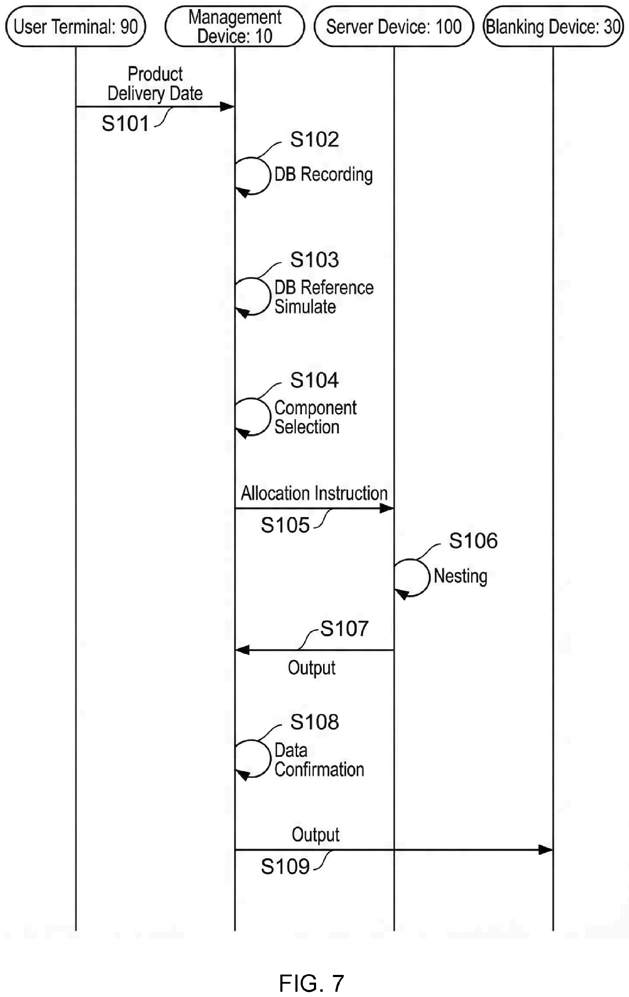

FIG. 7 is a sequence chart illustrating a nesting allocation method in the management system 1. This sequence corresponds to the operation from order receipt to determination of nesting allocation in step S1 to step S3 among the operations in FIG. 6 described above. In step S101, the management device 10 receives input of a delivery date of a product ordered by a customer via the user terminal 90. Note that the received information includes various order information and the like in addition to the delivery date of the product.

In step S102, the management device 10 records the received various data in the database. Here, a database for managing products and components recorded as data will be described.

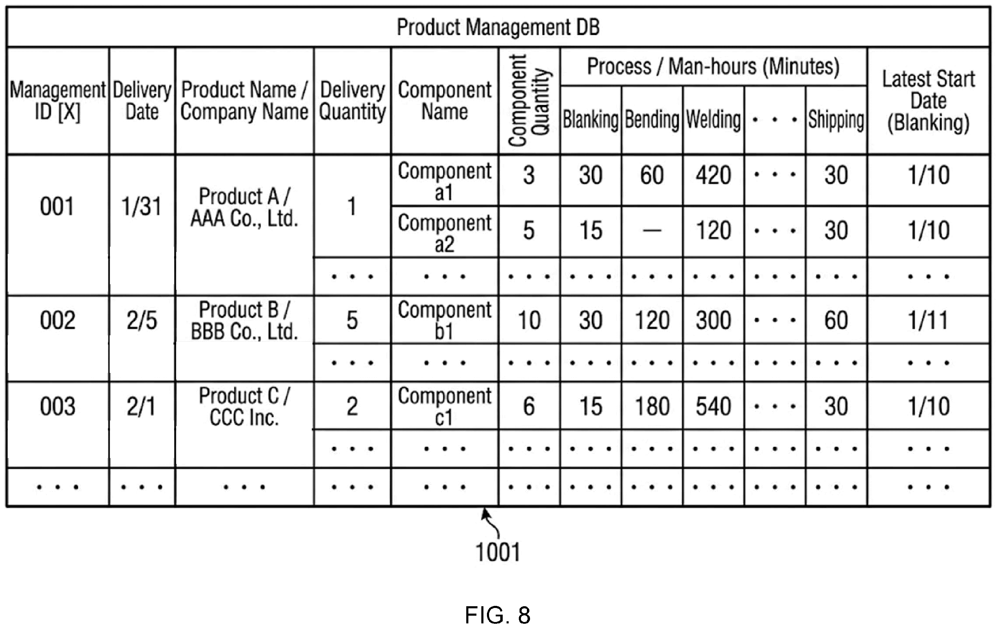

FIG. 8 shows a product management database. In this example, the product management database 1001 includes a plurality of records. Each record corresponds to one order. Each record includes a management ID, a delivery date, a product name/company name, a delivery quantity, a component name, a component quantity, process/man-hours (minutes), and a latest start date (blanking). In this example, the management ID includes ID information that can uniquely identify each order based on order information. In this example, the delivery date includes information representing the delivery date of the product; for example, a date. In this example, the product name/company name includes unique information for identifying the product and the customer. Note that these may be ID information or the like. In this example, the delivery quantity includes information representing the quantity of products required for delivery. In this example, the component name includes a unique name or identification information for each component constituting the product. In this example, the component quantity includes information representing the quantity of components required to constitute the product. In this example, the process/man-hours (minutes) includes information representing processes of each component and man-hours (number of minutes) required for each process. In this example, the latest start date (blanking) includes information, for example, a date, representing a deadline (cutoff) of the blanking process calculated by calculating backward the man-hours of each process from the delivery date of the product. Here, the delivery date of the product for calculating the latest start date (blanking) corresponds to order information received from the customer. On the other hand, the man-hours of each process are numerical values estimated (simulated) by the management device 10. Next, a method of estimating man-hours of each process will be described.

Referring to FIG. 7 again, in step S103, the management device 10 refers to various databases and simulates man-hours of each process, that is, a product schedule. Here, various databases required for simulation and results of the simulated schedule will be described. Note that the following description will take a welding process performed manually such as by a worker who is a user as an example.

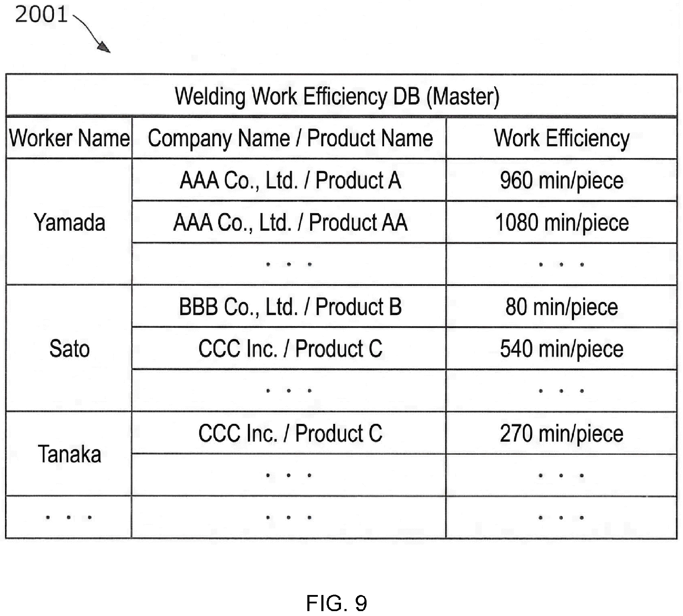

FIG. 9 shows welding work efficiency. In this example, the welding work efficiency database 2001 includes a worker name, a company name/product name, and work efficiency. In this example, the welding work efficiency database 2001 is master data created in advance. For example, if the product is a repeat product that has been manufactured once, work efficiency estimated from past actual results is recorded as master data. In this example, the worker name refers to a member engaged in a factory or the like, and includes information representing a user who performs welding work at a site of a welding process. In this example, the company name/product name includes information representing a company name, which is a customer assigned to the worker and a product name ordered by the customer. In this example, the work efficiency includes, for example, information representing the number of minutes (time) taken by the worker for welding work per one product; that is, man-hours. In this example, the work efficiency is calculated in advance based on the actual results of the worker. Note that even if the product is not a repeat product but is to be manufactured for the first time, it may be assigned to any worker. In this case, numerical values calculated in advance considering the skill level of the worker and the like based on a specification document or the like in which the work process of the product and details of the process are described, instead of actual past results, are recorded in the database. Note that the work efficiency may be set in advance for each component constituting the product in addition to for each product. Next, a method of simulating assignment of workers and schedules in the welding process will be described.

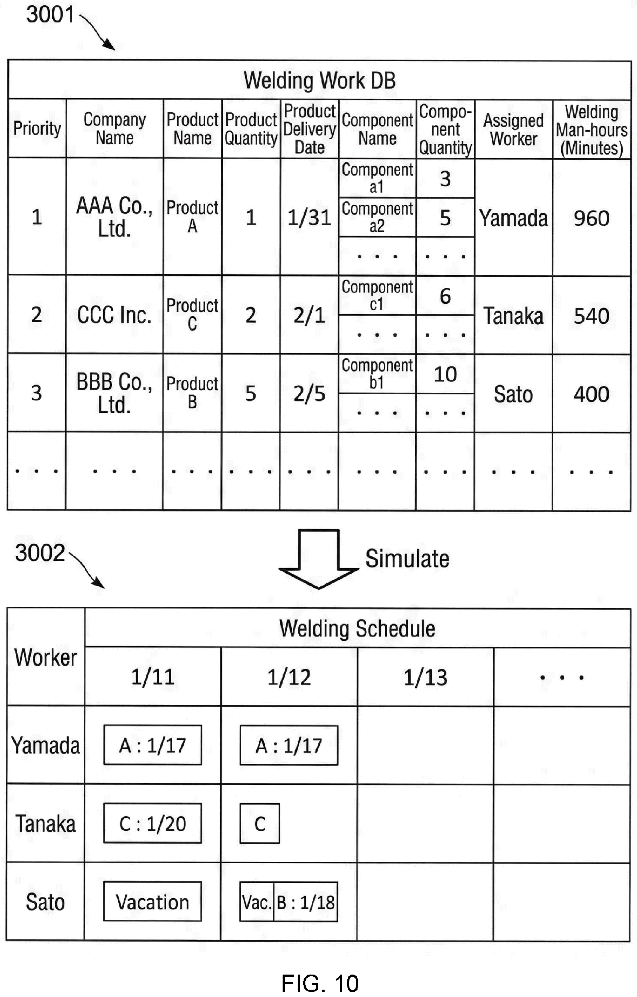

FIG. 10 shows welding work/welding schedule. In this example, the welding work database 3001 includes priority, company name, product name, product quantity, product delivery date, component name, component quantity, assigned worker, and welding man-hours (minutes). In this example, the welding work database 3001 represents a database that records assigned workers and welding man-hours (minutes) for each product arranged in a predetermined priority (for example, product delivery date order and/or order date order). In this example, the welding work database 3001 compares and examines work efficiency for each assigned worker based on the welding work efficiency database 2001 for each product, and assigns a worker. Further, the welding work database 3001 calculates and records welding man-hours (minutes) corresponding to the quantity of each product for the assigned worker. Note that, in this example, the welding work database 3001 may record welding man-hours (minutes) by the assigned worker for each product calculated considering the quantity of each component. Next, a method of simulating a schedule in the welding process will be described.

In this example, the welding schedule 3002 represents a result of assigning welding man-hours (minutes) for each assigned worker recorded in the welding work database 3001 to a schedule for each worker performing welding work. In this example, welding man-hours (minutes) are assigned according to the working hours of the worker. In this example, when the actual working hours are 8 hours a day (480 minutes excluding breaks), the result represents that 960 minutes of welding man-hours (minutes) in the product A with the first priority are assigned to two full days of January 11 and January 12 for the schedule of worker Yamada. Similarly, welding man-hours (minutes) are assigned to respective schedules for workers Tanaka and Sato. Note that this schedule assignment (simulation) result relates only to the welding process. In this example, since the welding process is performed manually, it can be said to be an example of a bottleneck in the manufacturing process, that is, a process where stagnation of business or decrease in productivity is likely to occur (a process where errors are likely to occur in temporal prediction results). Therefore, the welding process has been described here as a method of determining in advance. Subsequently, simulation results of all processes of the product will be described.

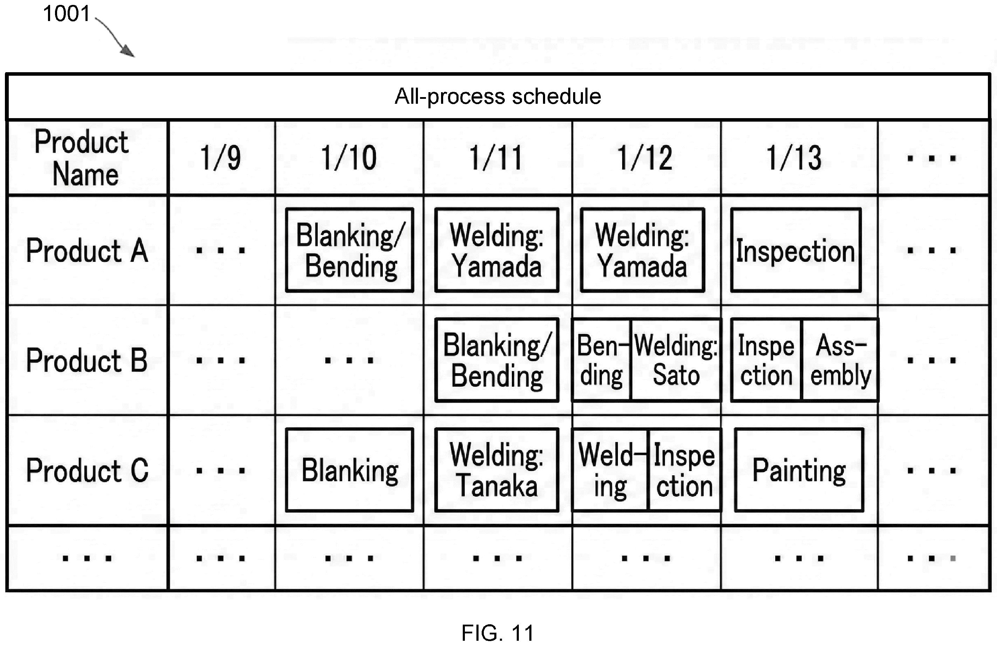

FIG. 11 shows an all-process schedule. In this example, the all-process schedule 3003 represents an all-process schedule for each product. In this example, the all-process schedule 3003 represents a simulation result in which schedules of other respective processes are determined by a predetermined method based on the schedule of the welding process determined in advance. In this example, man-hours of each process including the welding process are calculated by the method described above/other methods. In this example, man-hours of each process are calculated based on, for example, past actual results of repeat products or work processes such as specification documents. Note that here, the schedule is determined for each product (or for each component) rather than for the worker (because each process is not necessarily performed manually). From the above, the management device 10 can simulate the schedule for each product by the method described above. Finally, the implementation date and time of the blanking process in the simulated schedule, for example, "1/10" for product A, is recorded in the product management database 1001 as the latest start date (blanking) of the product. Note that the latest start date (blanking) may be determined for each component.

Referring to FIG. 7 again, in step S104, the management device 10 selects components for nesting. In this example, the management device 10 selects at least some components from among components for which the blanking process has not been completed among ordered products, based on the latest start date (blanking) described above. In this example, "based on the latest start date" refers to selecting components with reference to the latest start date, and includes, for example, an example of selecting components whose latest start date (blanking) is included in a predetermined period (for example, the current day, the next operation day, and the operation day after next). Alternatively, "based on the latest start date" includes an example of selecting components according to a priority given in order from the latest start date (blanking) closest to the current date and time. From the above, the management device 10 can select components based on the latest start date. Note that the management device 10 may determine an upper limit value of the number of selections based on the man-hours of the blanking process set in advance for each day, and select components until the integration of man-hours required for the selected components reaches the upper limit value.

In step S105, the management device 10 instructs allocation to the server device 100. In this example, the management device 10 outputs an allocation instruction including various kinds of information such as identification information, size, quantity, and material of each selected component to the server device 100. Note that various kinds of information may include information regarding the sheet material to which the components are to be allocated.

Upon receiving the instruction for allocation from the management device 10, the server device 100 allocates each component included in the instruction to the sheet material; that is, performs nesting (step S106). In this example, nesting to the sheet material is performed by a known method from the viewpoint of yield or the like. Here, nesting will be described.

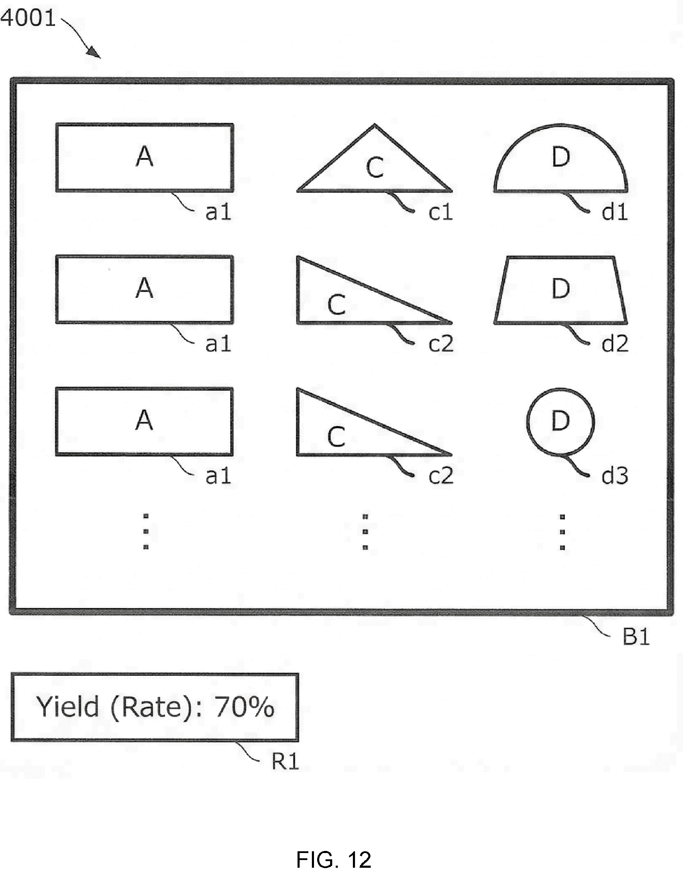

FIG. 12 shows a nesting arrangement. In this example, nesting arrangement data 4001 represents an example of nesting data in which selected components are allocated to a sheet material. In this example, sheet material B1 represents a sheet material (also referred to as a large plate) serving as a foundation of components for each product. In this example, component a1 represents a component of product A. In this example, components for each product in product A, product C, and product D are nested in the sheet material B1. These components are an example of components selected based on the latest start date (blanking) by the management device 10 in step S104. Here, the yield R1 shown in FIG. 12 is, for example, a ratio (%) representing the ratio of the total area of the nested components to the area of the sheet material B1. In this example, the server device 100 calculates the yield of each sheet material. The server device 100 allocates the instructed components to the sheet material B1 so as to optimize (for example, maximize) the yield.

Returning to FIG. 7. In step S107, when the nesting allocation is completed, the server device 100 outputs the created nesting data to the management device 10. In this example, the management device 10 records the output nesting data in the database. Note that the management device 10 may calculate the total or daily work time required for the blanking process based on the output nesting data.

In step S108, when acquiring the nesting data from the server device 100, the management device 10 confirms the data. In this example, confirmation of data includes determination of necessity of correction of the acquired nesting data (an example of allocation). In one example, an actual human such as an administrator visually checks the nesting data and determines whether there is a need for performing re-nesting such as correction, addition of components, and/or deletion on the data (an example of necessity of correction) based on various viewpoints such as yield. The worker inputs the result of the determination to the management device 10. The management device 10 determines the necessity of correction based on this input. Note that if correction is necessary, the management device 10 can instruct the server device 100 to re-allocate nesting again. Here, step S108 will be described more specifically.

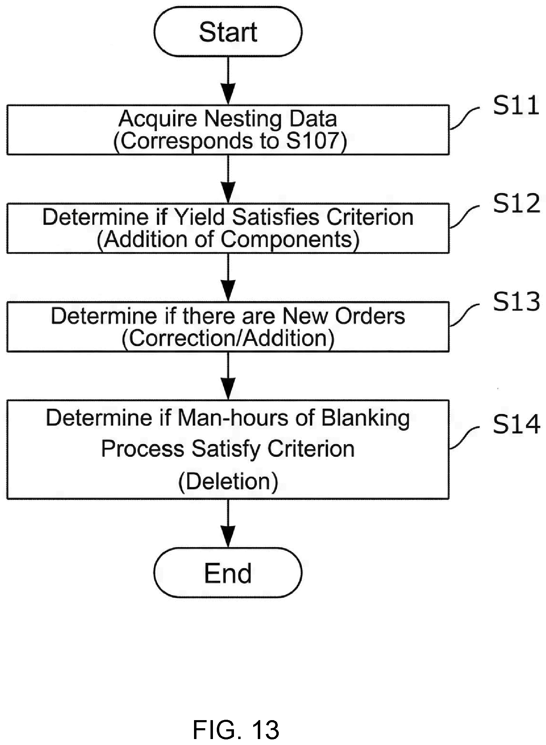

FIG. 13 is a flowchart illustrating a re-nesting method in the management system 1. In step S11, the management device 10 acquires nesting data. In this example, the process of step S11 corresponds to the process of step S107 in FIG. 7. Regarding the following operations, the management device 10 cooperates with a worker to proceed with the processing. Note that in this example, cooperation with a worker includes the meaning that a human (user) such as a worker makes at least a part of the judgment related to each step.

In step S12, the management device 10 determines whether the yield satisfies a criterion for the acquired nesting data. In this example, the server device 100 allocates components so as to maximize the yield, but a state where the yield does not satisfy a required level may occur, such as when the total area of selected components is significantly small relative to the area of the sheet material B1. In this example, when the yield of a certain sheet material is a yield (e.g., 20%) below a required level of yield (e.g., 70% or more) (that is, when the ratio of remaining material of the sheet material is as much as 80%), it is preferable to add components to be allocated in order to obtain a yield equal to or higher than the required level. In this example, when it is determined that the yield does not satisfy the criterion, the management device 10 performs re-selection of components (e.g., addition of components). In this example, re-selection of components may be performed by the method described above (method based on the latest start date) or may be performed by a different method. Any method may be used as long as it is a method for adding components. In this example, the management device 10 may refer to the schedule again and select components having a margin in the number of days from nesting to processing. Further, when performing re-nesting after re-selection of components, the management device 10 outputs an allocation instruction to the server device 100 again to cause re-nesting to be performed. Thereby, the management device 10 can perform re-nesting by addition of components.

Here, the criterion regarding yield is supplemented. For example, in a case where an instruction to allocate a total of 100 components to sheet materials is given, consider an example where not all 100 components fit in one sheet material, and 70 components are allocated to sheet material B1 and 30 components are allocated to sheet material B2.

The "yield" in one example is the yield as a whole of a plurality of sheet materials allocated for one instruction, that is, (total area of 100 components) / (total area of 2 sheet materials). In this case, there is one yield value, and whether the yield satisfies the criterion is determined collectively for the plurality of sheet materials as a whole. Re-nesting is performed for the 100 components and added components as a whole.

The "yield" in another example is the yield in each of the plurality of sheet materials. For sheet material B1, (total area of 70 components) / (area of sheet material) is the yield, and for sheet material B2, (total area of 30 components) / (area of sheet material) is the yield. In this case, there are yield values for the number of sheet materials (two), and whether the yield satisfies the criterion is determined individually for each of the plurality of sheet materials. Re-nesting is performed targeting the components (30 components in this example) allocated to the sheet material (sheet material B2 in this example) whose yield did not satisfy the criterion and added components.

Re-selection of components is a concept including both addition and deletion of components. Whether to adopt addition or deletion as re-selection of components is determined based on set conditions. For example, when the man-hours of the blanking process have not reached the upper limit, addition of components is selected, and when the man-hours of the blanking process have reached the upper limit, deletion of components is selected. Alternatively, when the period until the latest start date is shorter than a criterion, addition of components is selected, and when the period until the latest start date is longer than the criterion, deletion of components is selected. Note that these are examples of items of determination conditions, and whether to adopt addition or deletion may be determined based on a condition in which these items are combined.

In step S13, the management device 10 determines whether there is a new order. In this example, since orders from customers are irregular, if an order is received in the middle of nesting, the management device 10 can consider whether the newly ordered product is subject to re-nesting. In this example, the management device 10 determines whether there is a new order by referring to, for example, a database. If there is a new order, the management device 10 simulates the schedule again, for example, similarly to step S103 described above. The management device 10 selects components of the newly ordered product based on the latest start date in the simulated schedule. The management device 10 allocates the selected components to the target sheet material via the server device 100. Thereby, the management device 10 can perform re-nesting by correction of nesting data and addition of components.

In step S14, the management device 10 determines whether the man-hours of the blanking process satisfy a criterion. In this example, the management device 10 determines whether the re-nested nesting data is feasible within a predetermined period (e.g., within the current day) based on the judgment of a worker such as a worker belonging to the blanking site. In this example, when the man-hours of the blanking process do not satisfy the criterion, for example, when the man-hours of the blanking process increase from the initial ones as a result of re-nesting and the worker determines that the amount cannot be implemented within the current day, the management device 10 deletes arbitrary components (or sheet material) from the re-nested nesting data via the server device 100. Thereby, the management device 10 can perform re-nesting by deletion of components.

Referring to FIG. 7 again, in step S109, the management device 10 outputs the above-described nesting arrangement data 4001, that is, a nesting layout diagram (or simply nesting diagram) for which allocation to the sheet material has been completed, to the blanking device 30. From the above, the management system 1 can determine a nesting arrangement in consideration of a process schedule. Subsequently, an operation method of determining assignment of transport means to each component nested in the sheet material will be described.

### 3-2. Method of Acquiring Position Information of Transport Means

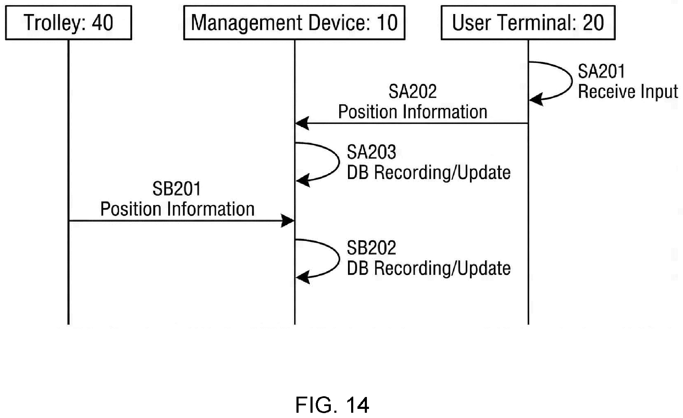

FIG. 14 is a sequence chart illustrating a method of acquiring position information of transport means in the management system 1. Here, among the operations in FIG. 6 described above, an operation of acquiring position information of transport means as a preliminary stage of step S4 will be described. In this example, position information (an example of a current position) is used when assigning components blanked by the blanking process to transport means. Here, regarding the processing in FIG. 14, the following two types of processing are implemented. The first is (A) processing when the management device 10 acquires position information from a worker via the user terminal 20. The second is (B) processing when the management device 10 acquires position information directly from the trolley 40. First, processing (A) will be described.

In step SA201, the user terminal 20 receives input of position information of a plurality of trolleys 40 from a worker. In this example, in order to load blanked components, the worker looks for an empty trolley 40 in advance and brings it to a predetermined position, for example, a place for the trolley 40 to stand by. In this example, the worker inputs identification information (trolley ID) of the trolley 40 standing by at the predetermined position to the user terminal 20 as a transport means capable of component assignment. Note that an empty trolley 40 is basically used for loading components. Therefore, the worker inputs to the user terminal 20 the usage status (vacancy status) of the transport means.

In step SA202, the management device 10 acquires position information of the trolley 40 from the user terminal 20. In this example, the user terminal 20 transmits position information for each trolley 40 to the management device 10 according to input contents received from the worker.

In step SA203, the management device 10 records the position information of the trolley 40 acquired from the user terminal 20 in the database. In this example, the management device 10 updates the current position of the trolley 40 in the database to the latest information. Thereby, the management device 10 can record current positions of a plurality of transport means. Here, the database in which transport means are recorded will be described.

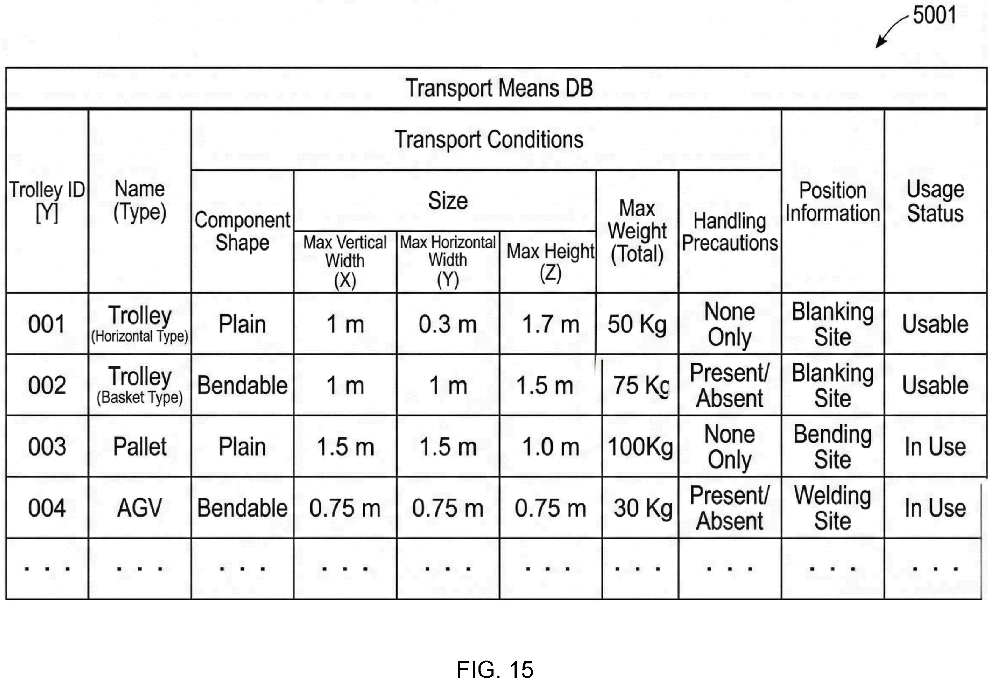

FIG. 15 shows transport means and transport conditions. In this example, the transport means database 5001 represents an example of a database showing a correspondence relationship between each transport means and transport conditions for loading components and position information. In this example, the transport means database 5001 includes a trolley ID, name/type, transport conditions, position information, and usage status. In this example, the trolley ID includes ID information uniquely identifiable for each transport means. In this example, the name/type includes information representing the type and name of each transport means, for example, a trolley, a pallet, and an AGV (Automated Guided Vehicle). In this example, the transport conditions include, for example, the shape, size, weight, and presence or absence of handling precautions for the component. In this example, the component shape includes information representing the shape of the component itself; for example, whether it is a plain-shaped component immediately after blanking, or whether a component with a bent shape can also be loaded. In this example, the size includes maximum vertical width (X), maximum horizontal width (Y), and maximum height (Z). In this example, the maximum vertical width (X), maximum horizontal width (Y), and maximum height (Z) represent the maximum values (upper limit values) of the loaded components as a whole in a state where a plurality of components are loaded on the transport means, when three sides of a loading part in the transport means are defined as X axis, Y axis, and Z axis, respectively. In this example, the maximum weight (total) represents the maximum value of the total weight of all components that can be loaded on the transport means. In this example, the presence or absence of handling precautions includes information representing the suitability of each transport means with respect to presence/absence of handling precautions determined in advance for each component. In this example, the position information includes information representing the current position of each transport means. The current position includes, for example, a work process site name, a predefined area name in the factory, or coordinates. In this example, the usage status represents information including whether it is a transport means capable of loading components in the blanking process, and whether it is an empty transport means. In this example, the position information and usage status are examples of data input to the user terminal 20 by a worker. From the above, firstly, the management device 10 can determine a transport means whose usage status indicates that it is usable among transport means whose position information indicates the blanking site as a transport means capable of loading components. Secondly, the management device 10 can select a transport means compatible with transport conditions for each component from among those determined as usable transport means, and perform assignment. Next, processing (B) will be described.

Here, in processing (B), it is mainly assumed that the management device 10 acquires position information directly from the trolley 40. This includes, for example, a case where a function for identifying its own position information, for example, GPS (Global Positioning System) and a beacon or the like, is implemented in the transport means.

In step SB201, the management device 10 acquires position information from the trolley 40. In this example, the trolley 40 transmits its own position information in the facility to the management device 10 via the network 9 constantly or at a predetermined timing/time/interval.

In step SB202, the management device 10 records the position information acquired from the trolley 40 in the database. In this example, the management device 10 updates the current position of the trolley 40 in the database to the latest information. Thereby, the management device 10 can record current positions of a plurality of transport means. Note that the operations from step SB201 to step SB202 are performed constantly or at a predetermined frequency.

In addition to the processing (A) and processing (B) described above, the management system 1 may implement/combine a method of identifying a current position by photographing a trolley storage area or the like with a camera installed at each process site, or a method of dispersing sensors in the factory and detecting the transport means with the sensors, to acquire position information and usage status of the transport means. Further, in addition to the usage status of the transport means, for example, a loading rate (%) may be managed by the system, and for that purpose, implementation such as attaching a sensor to the transport means may be added.

### 3-3. Assignment Method of Transport Means

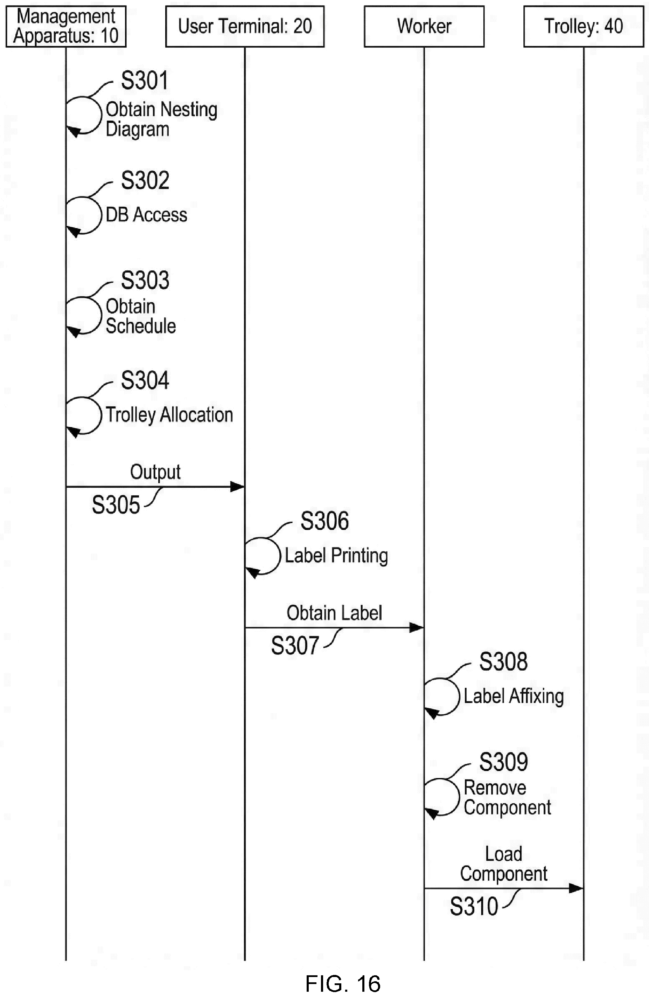

FIG. 16 is a sequence chart illustrating an assignment method of transport means in the management system 1. Here, among the operations in FIG. 6 described above, an operation of determining assignment of transport means for each component nested in the sheet material in step S4 will be described. In step S301, the management device 10 acquires a nesting diagram from the database. In this example, the management device 10 acquires, for example, the nesting arrangement data 4001 described above. Here, it is assumed that each component included in the nesting arrangement data 4001 is assigned to a transport means.

In step S302, the management device 10 accesses the database in which current positions of a plurality of transport means are recorded. In this example, the management device 10 can acquire transport conditions, position information, and usage status of a trolley 40 with reference to the transport means database 5001 described above. Note that, in this example, the management device 10 can identify usable transport means based on whether, for example, a trolley 40 located near the site of the blanking process is usable among the acquired position information and usage status.

In step S303, the management device 10 refers to the schedule (e.g., all-process schedule 3003, etc.) and acquires information on post-processes of each component and workers involved in the post-processes. Thereby, the management device 10 can acquire/link information regarding post-processes for each component in the nesting diagram. The data acquired here is used to present the post-process of each component to a worker.

In step S304, the management device 10 performs assignment for each component from among trolleys 40 determined as usable transport means. In this example, the management device 10 selects one transport means from among a plurality of transport means for each component according to the transport conditions in the transport means database 5001 described above, and assigns the selected transport means to the component. In this example, as the assignment method of transport means, for example, the management device 10 determines whether the size (especially, vertical width and horizontal width) for each component falls within a prescribed size of the transport means in order from components allocated to the sheet material, and assigns it. Alternatively, heights for each component are summed up, and assignment is performed until the maximum height is reached. Alternatively, assignment is performed until the weight for each component reaches the maximum weight. Alternatively, referring to the schedule, assignment is performed depending on whether the shape of the component changes due to the bending process; that is, whether the transport means is compatible with the component whose three-dimensional shape has changed due to the bending process. Alternatively, assignment is performed depending on whether the transport means is compatible with the presence or absence of handling precautions for each component. In this example, the assignment method of transport means may be any method as long as it is performed using transport conditions and schedules and the like. Here, assignment of transport means to each nested component will be described.

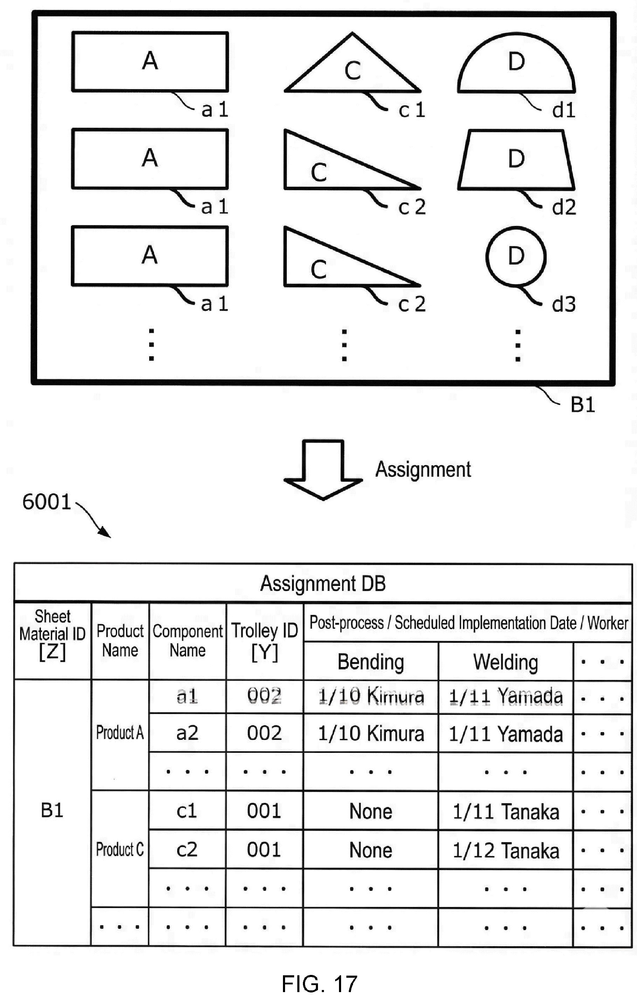

FIG. 17 shows an assignment result of transport means. In this example, sheet material B1 represents a nesting diagram of each component to be blanked by the blanking process. Note that the sheet material B1 includes the nesting arrangement data 4001 described above. In this example, the assignment database 6001 represents information on the transport means assigned by the management device 10 and the post-process for each component in the sheet material B1. In this example, the assignment database 6001 includes a sheet material ID, a product name, a component name, a trolley ID, and post-process/scheduled implementation date/worker. Further, in this example, the sheet material ID includes ID information for uniquely identifying blanking process processing (batch processing) of the sheet material and components blanked based on the nesting arrangement data 4001 described above. In this example, the product name and component name include information uniquely identifying the product and component blanked in the blanking process corresponding to the sheet material ID, respectively. In this example, the trolley ID includes unique ID information of the transport means (trolley 40) assigned by the management device 10 for each component. In this example, the post-process/scheduled implementation date/worker includes a list of presence/absence of respective post-processes subsequent to the blanking process of each component (or each product), a scheduled implementation date for each process, and information representing a worker name if there is a worker in charge. In this example, the management device 10 can manage information on whether each post-process exists, when the scheduled implementation date is, if any, and who the worker is, for each component. Note that, in this example, the assignment database 6001 may include an instruction for the trolley 40 loaded with components; for example, a movement instruction/remaining instruction corresponding to each post-process.

Referring to FIG. 16 again, in step S305, the management device 10 outputs the result of the assignment to the user terminal 20. In this example, the result of the assignment includes information in the nesting arrangement data 4001 and the assignment database 6001. That is, the result of the assignment includes information on components to be blanked/blanked by the blanking process, and information on transport means and post-processes assigned to each component. Note that the blanking process of components may be performed at any timing as long as it is a stage where allocation of nesting and assignment of transport means are completed.

In step S306, the user terminal 20 prints the result of the assignment acquired from the management device 10 as a label. In this example, the user terminal 20 inputs necessary data among the results of the assignment into a format according to a predetermined printing label format. In this example, the user terminal 20 is connected to a predetermined printing device. In this example, the user terminal 20 utilizes the printing device to print a label on which various kinds of data are reflected. Here, the label will be described.

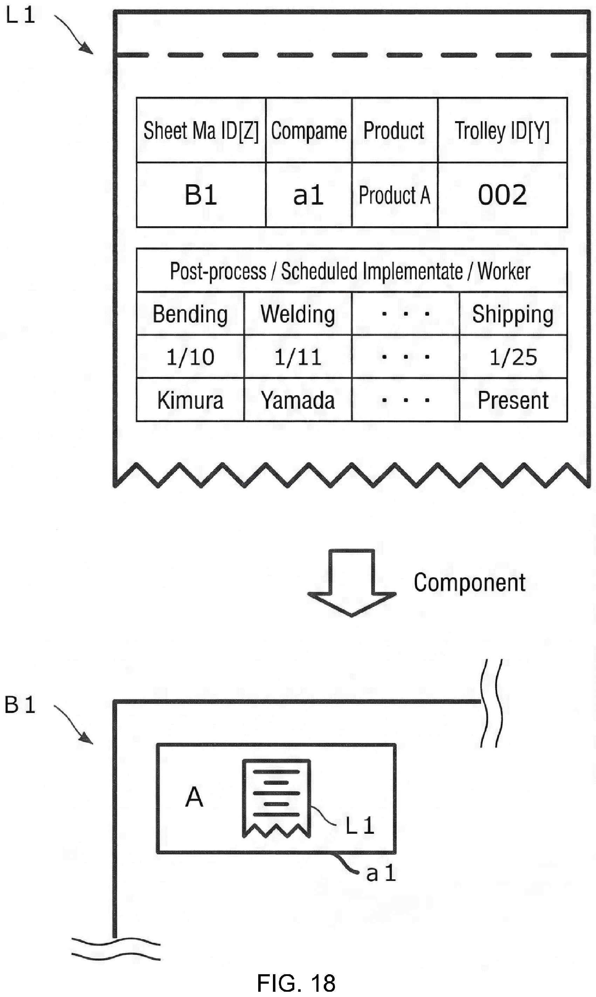

FIG. 18 shows a label. In this example, label L1 represents a printed label on which various kinds of data are reflected. In this example, the label L1 includes a sheet material ID, a component name, a product name, a trolley ID, and post-process/scheduled implementation date/worker. Note that any data may be printed on the label L1 as long as it is information for improving workability and convenience for the worker. In this example, the label is printed for each component. Various kinds of information are printed on the front surface of the label. Note that the back surface of the label may have a function capable of being attached to (or removable from) a component, for example, a sticker function. Thereby, the worker can attach the label to, for example, each component cut from the sheet material B1 based on the information printed on the label.

Referring to FIG. 16 again, in step S307, the worker acquires the printed label from the user terminal 20 via the printing device.

In step S308, the worker attaches the label to each component. In this example, components are placed around the blanking device 30 at the blanking site in a state of being cut (hollowed out) from the sheet material. Therefore, the worker attaches the corresponding label onto each component while referring to the information printed on the label according to the nesting diagram displayed on the user terminal 20 or the blanking device 30, for example. Note that the worker at the blanking site may sort transport means to be located at a predetermined place for each component or for each worker of a post-process at the stage where all labels are printed.

In step S309, the worker blanks components from the sheet material after attaching the label to each component. At this stage, although each component is already separated from the sheet material, it retains the positional state represented by the nesting diagram with respect to the sheet material, so the worker needs to extract the component from the sheet material.

In step S310, the worker loads the extracted component onto the trolley 40 based on the label. In this example, when all the extracted components are loaded onto the trolley 40, the worker moves the trolley 40 to a workplace of a post-process based on the label or a schedule notified in advance. Note that these movements may be executed based on an instruction for the trolley 40 loaded with components; for example, a movement instruction/remaining instruction corresponding to each post-process in the assignment database 6001. That is, the worker may determine the operation of the trolley 40 by any method. Here, inter-process movement of the transport means will be described.

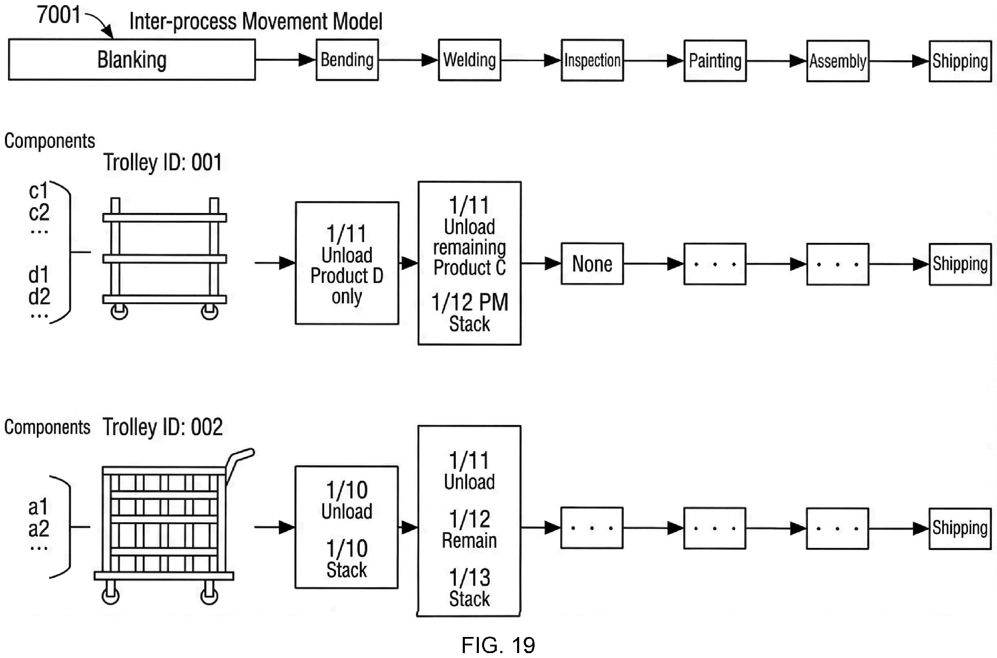

FIG. 19 shows inter-process movement of transport means. In this example, the inter-process movement model 7001 represents an example of a model schematically representing how a transport means already loaded with each component moves between processes. Further, in this example, the inter-process movement model 7001 is managed by a database or the like of the management device 10. In this example, the inter-process movement model 7001 has a flow of processes including a blanking process, a bending process, a welding process, ... (omitted) ..., and a shipping process. In this example, the inter-process movement model 7001 represents work for each process of transport means represented by various trolley IDs. In this example, the work for each process includes, for example, work date, loading/unloading, stacking, adding, and transshipping for each component, as well as movement instructions and remaining instructions for each transport means. In this example, a transport means whose trolley ID is represented by "001" (hereinafter referred to as "trolley 001") loads, for example, components c1 and c2 etc. of product C and components d1 and d2 etc. of product D in the blanking process. In this example, the trolley 001 unloads only components of product D on January 11 in the bending process. Thereafter, proceeding to the welding process, the trolley 001 unloads all remaining components of product C on January 11. Also, the trolley 001 stacks welded components of product C in the afternoon of January 12 in the welding process. Thereafter, the trolley 001 passes through the inspection process and proceeds to the workplace of the post-process. In this example, a similar inter-process movement model is provided for a transport means whose trolley ID is represented by "002.. Note that the inter-process movement model 7001 merely represents an example of the inter-process movement model, and information regarding components and transport means for each process may be reflected in the inter-process movement model in any manner. Further, at least a part of these inter-process movement models may be shared with workers. Thereby, workability and convenience for workers can be improved. In this example, the worker may freely manage the operation of the transport means using these inter-process movement models. In this example, when additional loading of components occurs for the transport means in a certain process, extra transport means may be prepared in advance for each process. Further, similarly, when the shape of a component changes due to a bending process or the like and transshipping occurs, a transport means optimal for the shape of the component after deformation may be prepared for each process.

From the above, the management system 1 can classify each component for each transport means such as a trolley, for example, and present various kinds of information to a worker who moves the trolley. Thereby, appropriate operation management of extracted components is performed, and workability of each process is improved. Further, inconvenience such as components being lost, components whose whereabouts are unknown being left at the site, or a worker being unable to grasp the post-process of a component is eliminated, and convenience is improved. Furthermore, by utilizing the inter-process movement model of transport means, manageability/operability of transport means and the like is improved.

### 4. Modifications

The present invention is not limited to the embodiments described above, and various modifications are possible. Several modifications will be described below. Two or more of the items described below may be combined and applied.

### (1) Management System 1

The hardware configuration and network configuration in the management system 1 are not limited to those illustrated in the embodiment. The management system 1 may have any hardware configuration and network configuration as long as required functions can be realized. For example, a plurality of devices may physically cooperate to function as the management system 1. Note that the subject, configuration, and system structure shown in FIG. 2 are merely examples and merely represent an overview of the system. Therefore, in the management system 1, for example, the user terminal 20 may have a configuration of managing each device by a network constructed for each site.

### (2) management device 10 / server device 100

Part of the functions of the management device 10 may be implemented in another server. This server may be, for example, a physical server or a virtual server (including a so-called cloud). Further, the correspondence relationship between functional elements and hardware is not limited to that illustrated in the embodiment. For example, at least a part of the functions described as being implemented in the management device 10 in the embodiment may be implemented in another device or system, or conversely, at least a part of the functions described as being implemented in another device or system may be implemented in the management device 10. In this example, the management device 10 may have, for example, at least a part of functions of the server device 100, the user terminal 20, the blanking device 30, and/or the trolley 40, and may be configured to, for example, constantly acquire various kinds of data in each device. Further, the management device 10 may perform nesting allocation processing, instead of the server device 100. Further, the server device 100 is not limited to that illustrated in the embodiment. At least a part of the allocation means of the server device 100 may be implemented in the management device 10. Thereby, the management device 10 can perform the nesting allocation processing described above.

### (3) User Terminal 20 / User Terminal 90

The user terminal 20 and the user terminal 90 are not limited to those illustrated in the embodiment. In this example, a user (worker or customer, etc.) using each terminal utilizes the management system 1 via his/her own terminal, but the configuration and operation described above may be realized by any display screen, input device, and various UIs. Further, the user terminal 20 may be configured to be connected to various devices in addition to the printing device. In this example, the user terminal 20 may have a device capable of imparting a sticker function to a printed material. Thereby, a sticker function can be imparted to a printed label. Further, the method of presenting various kinds of information to the worker is not limited to the label, and any method/means may be used.

### (4) Blanking Device 30

The blanking device 30 is not limited to that illustrated in the embodiment. In this example, the blanking device 30 may be a gas cutting machine, a plasma cutting machine, or the like in addition to a press machine or a laser machine. Further, the blanking device 30 may have any hardware configuration as long as required functions/operations can be realized. In this example, the blanking device 30 may be configured to have a CPU for analyzing and processing the acquired nesting diagram, a memory or storage as storage means for various kinds of data, a communication IF for performing communication processing with each device, an input device for receiving various operations of a worker, and/or a display device for displaying various kinds of data, and the like.

### (5) Trolley 40 (Transport Means)

The trolley 40 (transport means) is not limited to that illustrated in the embodiment. In this example, the trolley 40 may be a belt conveyor, a lifting device (elevator or lift), a transport robot (robot arm), or the like in addition to a trolley, a pallet, a forklift, and an automated guided vehicle. Further, the trolley 40 may have any hardware configuration as long as required functions/operations can be realized. In this example, the trolley 40 may be configured to have a CPU for executing various kinds of data processing, for example, calculation of the current position of the device itself, simulation of a movement route, or calculation of cargo occupancy rate, a memory or storage as storage means for various kinds of data, a communication IF for performing communication processing with each device, an input device for receiving various operations of a worker, and/or a display device for displaying various kinds of data, and the like.

### (6) Camera

The camera (imaging means) is not limited to that illustrated in the embodiment. The camera may have any hardware configuration as long as required functions/operations can be realized. In this example, the camera may be configured to have a CPU for executing various kinds of data processing, a memory or storage as storage means for various kinds of data, a communication IF for performing communication processing with each device, an input device for receiving various operations of a worker, and/or a display device for displaying various kinds of data, and the like.

### (7) Product / Component

Products and components are not limited to those illustrated in the embodiment, respectively. In this example, the product may be anything, and may be, for example, a metal/non-metal product, a plastic product, a mechanical/electronic product, a wood product, a leather product, or the like. In this example, the component may be anything, and may be, for example, a metal/non-metal component, a plastic component, a mechanical/electronic component, a wooden component, a leather component, or the like.

### (8) Sheet Material

The sheet material is not limited to that illustrated in the embodiment. In this example, the sheet material may be anything, and may be, for example, a metal plate, as an example, a mild steel plate, a stainless steel plate, a surface-treated steel plate, an aluminum plate, a copper plate, or the like. Alternatively, it may be a wood material or the like.

### (9) Operation Overview

The flowchart shown in FIG. 6 merely shows an example of the operation, and the operations of the management system 1 and the management device 10 are not limited to this. A part of the illustrated operations may be omitted, the order may be changed, or a new operation may be added. In this example, in step S5, if it is immediately before components are blanked by the blanking device 30, assignment of transport means in step S4 may be performed after a predetermined time has elapsed since nesting allocation was performed in step S3. Thereby, the management system 1 can update to perform optimal assignment according to the status of transport means.

### (10) Nesting Allocation Method

The sequence chart shown in FIG. 7 merely shows an example of the operation, and the operation of the management system 1 is not limited to this. A part of the illustrated operations may be omitted, the order may be changed, or a new operation may be added. In this example, in step S103, the management device 10 may divide at least some components into a plurality of groups, for example, product groups or customer groups, in advance before simulating the process schedule. Further, the management device 10 may assign a plurality of workers to a plurality of groups in a specific process (for example, a welding process) among a plurality of processes. Thereby, the management device 10 can allocate workers in charge for each product group or for each customer group. That is, this is introduced as processing for registering data in the welding work database 3001. Note that assignment of workers for each component may be performed by any method.

Further, in this example, in step S104, the management device 10 selects components in order from closest to the current date and time based on the latest start date for each component calculated by simulation, but components may be selected in any order. For example, the management device 10 may select components based on the groups described above. In this example, when there are a plurality of components whose latest start date is the same day (same time), the management device 10 may, for example, prioritize selecting one of them, and select a plurality of components classified into the same product group collectively in order.

Further, in this example, in steps S103 to S106, the processing from simulation to nesting performed by the management system 1 may be performed, for example, at the time of order receipt. When nesting is performed at the time of order receipt, the management system 1 can calculate approximately how many sheet materials are to be used in advance.

Further, in this example, in step S108, the data confirmation processing of nesting data performed by the management device 10 and the worker or the like may be, for example, all performed by the management device 10 (that is, automatically). In this example, the worker inputs a predetermined criterion such as yield and control when the criterion is not reached as a program, so that the implementation may be changed to one in which the management device 10 executes all of confirmation of nesting data, correction, re-selection of components, re-simulation, deletion of components, and the like.

The flowchart shown in FIG. 13 merely shows an example of the operation, and the operation of the management device 10 is not limited to this. A part of the illustrated operations may be omitted, the order may be changed, or a new operation may be added. In this example, in steps S12 to S14, re-nesting, such as addition of components, correction of nesting, or deletion of components/sheet materials may be executed upon being triggered by any judgment. In this example, the management device 10 may determine execution contents of re-nesting according to the operation status of the transport means (trolley 40) or the quantity of components remaining at the blanking site. Further, the management device 10 may implement at least a part of judgment by a worker as a function expressed by a program or the like. Thereby, the management device 10 can automatically determine execution contents (instruction contents) of re-nesting without waiting for judgment of a worker.

### (11) Method of Acquiring Position Information of Transport Means

The sequence chart shown in FIG. 14 merely shows an example of the operation, and the operation of the management system 1 is not limited to this. A part of the illustrated operations may be omitted, the order may be changed, or a new operation may be added. In this example, any method of acquiring position information and usage status of transport means may be used. In addition to the camera and sensor described above, any device may be introduced/implemented in the management system 1 and/or the management device 10 as long as it is a device that acquires position information and usage status of transport means. Further, any data representing position information and usage status may be recorded in the database. Alternatively, the management system 1 does not have to manage position information of transport means. That is, the management system 1 does not have to record position information of transport means in the database. In this case, a worker may visually confirm and use an empty transport means.

### (12) Assignment Method of Transport Means

The sequence chart shown in FIG. 16 merely shows an example of the operation, and the operation of the management system 1 is not limited to this. A part of the illustrated operations may be omitted, the order may be changed, or a new operation may be added. In this example, in step S304, the management device 10 may select a transport means according to transport conditions including conditions regarding a post-process subsequent to the blanking process for the component and a worker of the post-process, and assign the selected transport means to the component. Thereby, the management device 10 can assign components to transport means for each post-process of the blanking process / for each worker involved in the post-process, so workability/convenience is improved. Further, any data representing transport conditions may be recorded in the database. Further, when the transport means is a robot arm, for example, in step S305, allocation data of various databases may be output to a control device on the arm side. In this example, the arm can load components onto a trolley according to the output data.

### (13) Database

The database (or data itself) of the management system 1 shown in FIG. 8, FIG. 9, FIG. 10, FIG. 11, FIG. 15, and FIG. 17 is not limited to that illustrated in the embodiment. In this example, any data may be registered in the database, and may be, for example, customer information, order information, product specification documents, schedule information, drawing data, or the like. Further, the layout of the database is not limited to that illustrated, and data may be managed in any layout. Note that the management device 10 may output any data to each device as long as it is data registered in the database.

### (14) AI

Regarding the configurations and operations illustrated in the embodiment, AI and machine learning functions may be implemented in the management system 1. In this example, regarding implementation of AI in the management system 1, for example, functions for performing determination/proposal of optimal nesting arrangement related to the operation of the present invention, assignment of transport means to components cut out in the blanking process, and other schedule management of processes and workers, etc., may be implemented.

### (15) Blockchain

Regarding the configurations and operations illustrated in the embodiment, blockchain technology may be applied to the management system 1. In this example, regarding application of blockchain technology in the management system 1, for example, data registered in the database may be recorded in a blockchain network. Thereby, data can be protected in a state where deletion and rewriting, etc., of various kinds of data cannot be performed. Further, any data may be recorded in the blockchain network.

### (16) Other modifications

The programs executed by the CPU 101, CPU 201, and the like may be provided by downloading via a network such as the Internet, or may be provided in a state of being recorded on a computer-readable non-transitory recording medium such as a DVD-ROM. Note that each processor may be, for example, an MPU (Micro Processing Unit) or a GPU (Graphics Processing Unit) instead of the CPU.

### [Description of Reference Numerals]

1... Management system, 10... management device, 100... server device (allocation means), 20... User terminal, 30... Blanking device, 40... Trolley (transport means), 90... User terminal, 9... Network, 11... Receiving means, 12... Acquisition means, 13... Selection means, 14... Instruction means, 15... Transport assignment means, 16... Output means, 171... Calculation means, 172... Determination means, 173... Grouping means, 174... Worker assignment means, 18... Access means, 191... Storage means (DB), 192... Control means, 101... CPU, 102... Memory, 103... Storage, 104... Communication IF, 201... CPU, 202... Memory, 203... Storage, 204... Communication IF, 205... Input device, 206... Display device, 1001... Product management database, 2001... Welding work efficiency database, 3001... Welding work database, 3002... Welding schedule, 3003... All-process schedule, 4001... Nesting arrangement data, 5001... Transport means database, 6001... Assignment database, 7001... Inter-process movement model, B... Sheet material, R... Yield (rate), L... Label

## Claims

1. A management device comprising:
receiving means for receiving input of a delivery date of a product ordered by a customer for each of a plurality of products manufactured through a plurality of processes including a blanking process of blanking one or a plurality of components from a sheet material;
acquisition means for acquiring man-hours required for each of the plurality of processes;
selection means for selecting at least some components from among a plurality of components constituting one or a plurality of products for which the blanking process has not been completed among ordered products, based on the man-hours and the delivery date;
instruction means for instructing allocation of the selected components to allocation means that allocates instructed components to the sheet material for the blanking process;
transport assignment means for assigning each of the selected components obtained from the blanking process on the sheet material to which the selected components have been allocated by the allocation means, to a transport means, among a plurality of transport means, that transports the component to a workplace of a post-process subsequent to the blanking process; and
output means for outputting a result of the assignment.

2. The management device according to claim 1, further comprising
calculation means for calculating a latest start date of the blanking process of the component for each of the one or plurality of components constituting each of the plurality of products using the man-hours and the delivery date,
wherein the selection means selects the at least some components based on the latest start date.

3. The management device according to claim 1, further comprising
determination means for determining necessity of correction of the allocation,
wherein when it is determined by the determination means that correction is necessary, the instruction means instructs the allocation means to correct the allocation.

4. The management device according to claim 1, wherein
the acquisition means acquires the man-hours required for the process for each of the plurality of processes from a database in which man-hours defined for each process are recorded.

5. The management device according to claim 4, further comprising:
grouping means for dividing the at least some components into a plurality of groups; and
worker assignment means for assigning a plurality of workers to the plurality of groups in a specific process among the plurality of processes, wherein
man-hours are recorded for each process and for each worker in the database, and
the acquisition means acquires man-hours required for the assigned worker to perform work of the specific process from the database.

6. The management device according to claim 1, wherein
the plurality of transport means include a plurality of transport means having different shapes or types, and
the transport assignment means selects one transport means from among the plurality of transport means according to transport conditions of each of the some components, and assigns the component to the selected transport means.

7. The management device according to claim 6, wherein
the transport conditions include a condition regarding at least one of a shape, a size, a weight, and presence or absence of handling precautions for the component.

8. The management device according to claim 6, wherein
the transport conditions include a condition regarding a post-process subsequent to the blanking process for the component and a worker of the post-process.

9. The management device according to claim 6, wherein
the plurality of transport means include at least one type among a trolley, a pallet, and an automated guided vehicle.

10. The management device according to claim 1, further comprising
access means for accessing a database in which current positions of the plurality of transport means are recorded, wherein
the transport assignment means assigns the component to a transport means located at a specific position among the plurality of transport means.

11. A management method executed by a computer, the method comprising:
receiving input of a delivery date of a product ordered by a customer for each of a plurality of products manufactured through a plurality of processes including a blanking process of blanking one or a plurality of components from a sheet material;
acquiring man-hours required for each of the plurality of processes;
selecting at least some components from among a plurality of components constituting one or a plurality of products for which the blanking process has not been completed among ordered products, based on the man-hours and the delivery date;
instructing allocation of the selected components to allocation means that allocates instructed components to the sheet material for the blanking process;
assigning each of the selected components obtained from the blanking process on the sheet material to which the selected components have been allocated by the allocation means, to a transport means, among a plurality of transport means, that transports the component to a workplace of a post-process subsequent to the blanking process; and
outputting a result of the assignment.

12. A program for causing a computer to execute a process, the process comprising:
receiving input of a delivery date of a product ordered by a customer for each of a plurality of products manufactured through a plurality of processes including a blanking process of blanking one or a plurality of components from a sheet material;
acquiring man-hours required for each of the plurality of processes;
selecting at least some components from among a plurality of components constituting one or a plurality of products for which the blanking process has not been completed among ordered products, based on the man-hours and the delivery date;
instructing allocation of the selected components to allocation means that allocates instructed components to the sheet material for the blanking process;
assigning each of the selected components obtained from the blanking process on the sheet material to which the selected components have been allocated by the allocation means, to a transport means, among a plurality of transport means, that transports the component to a workplace of a post-process subsequent to the blanking process; and
outputting a result of the assignment.
